# FASCICULE DE BREVET EUROPEEN

(11) **EP 2 162 944 B1**
(45) Date de publication et mention de la délivrance du brevet: **17.08.2011**
(21) Numéro de dépôt: 08826110.2
(22) Date de dépôt: 12.06.2008
(51) Int. Cl.: H01M 10/0568, H01M 10/0567, H01M 10/0525, H01M 10/42

(54) **ACCUMULATEUR LITHIUM-ION CONTENANT UN ELECTROLYTE COMPRENANT UN LIQUIDE IONIQUE.**
LITHIUMIONENBATTERIE MIT EINEM EINE IONISCHE FLÜSSIGKEIT ENTHALTENDEN ELEKTROLYT
LITHIUM-ION BATTERY CONTAINING AN ELECTROLYTE THAT COMPRISES AN IONIC LIQUID

(30) Priorité: 15.06.2007 FR 0704264
(43) Date de publication de la demande: 17.03.2010
(73) Titulaire: Saft Groupe S.A., 93170 Bagnolet (FR)
(72) Inventeur: SIRET, Clémence, F-33520 Bruges (FR); CARATERO, Lucas, F-91400 Orsay (FR); BIENSAN, Philippe, F-33360 Carignan de Bordeaux (FR)
(74) Mandataire: Hirsch & Associés
(86) Numéro de dépôt international: PCT/FR2008/000802
(87) Numéro de publication internationale: WO 2009/007540

(56) Documents cités:
- EP-A- 1 380 569
- EP-A- 1 557 899
- EP-A- 1 642 894
- EP-A- 1 689 016
- WO-A-01/93363
- WO-A-2004/082059
- WO-A-2005/104269
- WO-A-2006/030624
- JP-A- 11 329 495

## Description

### DOMAINE TECHNIQUE

Le domaine technique de l'invention est celui des accumulateurs lithium-ion et plus particulièrement celui des accumulateurs lithium-ion contenant un électrolyte ininflammable.

### ART ANTERIEUR

En raison de leur densité d'énergie massique et volumique élevées, les accumulateurs lithium ion constituent une source d'énergie prometteuse.

Un accumulateur lithium ion possède un faisceau électrochimique comprenant une alternance d'électrodes positives (cathodes) et d'électrodes négatives (anodes) placées de part et d'autre d'une membrane séparatrice généralement en polyoléfine. Chaque électrode positive comprend une matière électrochimiquement active capable d'insérer du lithium dans sa structure (généralement un oxyde de métal de transition lithié tel que LiCoO₂, LiNiO₂, LiMnO₂ ou LiMn₂O₄). Chaque électrode négative comprend un matériau capable d'insérer réversiblement du lithium, tel que le carbone. Le faisceau électrochimique est imprégné d'un électrolyte non aqueux solide ou liquide. L'électrolyte contient un sel de lithium dissous dans un solvant organique ou, le plus souvent, dans un mélange de solvants organiques.

Ces solvants organiques sont généralement choisis dans le groupe des carbonates linéaires ou cycliques ou dans le groupe des esters. On peut citer comme exemples de carbonates cycliques classiquement utilisés le carbonate de propylène (PC) et le carbonate d'éthylène (EC), et comme exemples de carbonates linéaires, le carbonate de diméthyle (DMC) ou le carbonate de méthyle éthyle (EMC). On peut citer comme exemples d'esters, des esters linéaires tels que l'acétate d'éthyle (EA) ou le butyrate de méthyle (MB).

Généralement, on ajoute au mélange de solvants organiques un additif de passivation qui forme un film protecteur à la surface de l'électrode négative. Ce film empêche la co-insertion du solvant en même temps que le lithium dans l'électrode négative au cours du fonctionnement de l'accumulateur. La réduction du solvant organique provoque en effet la dégradation progressive de l'électrode négative au cours du fonctionnement de l'accumulateur. Ce film de passivation reste conducteur ionique. Généralement, on emploie du carbonate de vinylène (VC) comme additif de passivation.

Les solvants organiques précédemment cités sont conducteurs et peu visqueux. Ils présentent cependant l'inconvénient d'être volatils et inflammables. Des recherches ont donc été conduites afin de disposer d'un accumulateur lithium-ion comportant un électrolyte dont l'inflammabilité est réduite.

Il est connu de l'état de la technique d'utiliser un liquide ionique dans un électrolyte d'accumulateur lithium-ion pour réduire son inflammabilité. En effet, les liquides ioniques sont caractérisés par une stabilité thermique élevée et une inflammabilité réduite. Les documents WO2001/093363, W02002/076924, W02006/030624, WO2004/082059 et W02005/104269 décrivent des exemples de liquides ioniques.

La définition d'un liquide ionique est donnée dans ce qui suit. Un composé ionique forme des cristaux dans lesquels des cations chargés positivement et des anions chargés négativement s'attirent en raison de la force électrostatique existant entre un anion et un cation. Quand ce composé ionique est dissous dans un liquide, tel que l'eau, ce liquide possède alors la propriété de transporter l'électricité, c'est ce que l'on appelle un électrolyte. Des solutions d'électrolyte sont obtenues en dissolvant un composé ionique dans un solvant organique. L'électrolyte d'un accumulateur lithium-ion est par exemple obtenu de façon classique en dissolvant un sel de lithium, tel que LiPF₆, dans un ou plusieurs des solvants organiques précédemment cités.

Certains composés ioniques, soumis à une élévation de température, subissent une activation thermique capable de surmonter la force électrostatique entre l'anion et le cation. Ces composés ioniques deviennent ainsi liquides et sont aptes à transporter de l'électricité. Un sel dans cet état est généralement désigné par le terme de « sel fondu ».

Certains de ces sels fondus restent liquides à température ambiante et ne se solidifient pas, même à très basse température. De tels sels fondus sont désignés par le terme de « liquides ioniques à température ambiante» ou « liquides ioniques ». Le document W02005/104269 décrit un accumulateur lithium-ion comprenant un séparateur en céramique, un électrolyte comprenant un ou plusieurs liquides ioniques, un additif de passivation de l'électrode négative et un sel conducteur à base de lithium. Le pourcentage massique de liquide ionique représente au moins 50 % de l'électrolyte. Cet accumulateur présente une inflammabilité réduite. Cependant, il présente une capacité en décharge ainsi qu'une tension en décharge insuffisantes.

On recherche donc un accumulateur présentant une tension en décharge élevée, une capacité élevée et stable dans des conditions de cyclage. L'électrolyte de l'accumulateur recherché doit néanmoins conserver une inflammabilité réduite.

### RESUME DE L'INVENTION

L'invention a pour objet un accumulateur contenant :
- une électrode positive,
- une électrode négative,

Le document EP- A-1 689 016 divulgue une solution électrolytique destinée à un accumulateur au lithium à électrolyte non-aqueux qui contient à température ambiante un sel fondu constitué d'un sel d'ammonium quaternaire aliphatique dont le pourcentage massique dans la solution est compris entre 1 et 15%, ainsi qu'un solvant organique, un sel de lithium et un additif constitué de carbonate de vinylène dans une quantité comprise entre 1 et 5 % en poids par rapport à la solution électrolytique.

Le document EP-A-1 642 894 divulgue un sel d'ammonium quaternaire ainsi qu'un électrolyte contenant ce dernier, en mélange avec un solvant organique (de préférence un carbonate cyclique), un sel de lithium et éventuellement un additif organique apte à former un film de passivation sur l'électrode négative d'une pile au lithium.

Le document EP- A-1 557 899 décrit un électrolyte non- aqueux pour dispositifs électrochimiques, tels qu'une batterie secondaire ou un condensateur à double couche, cet électrolyte comprenant un sel fondu à température ambiante et un hydrocarbure fluoré, ainsi qu'un sel de lithium et un carbonate cyclique.

Le document JP 11 329495 A divulgue une composition d'électrolyte pour batterie secondaire, comprenant un sel de lithium tel que LiBF₄, un solvant organique non-aqueux et un sel quaternaire ayant une structure de type amidine N,N,N'-trisubstituée (comme par exemple le tétrafluoroborate de 1- méthyl-3- éthylimidazolium) dont le pourcentage massique dans l'électrolyte varie entre 30 et 99%.
- un électrolyte comprenant :
- un solvant organique choisi dans le groupe comprenant les carbonates, les esters linéaires d'un acide saturé, ou un mélange de ceux-ci,
- un additif apte à former un film de passivation sur la surface de l'électrode négative,
- au moins un sel de lithium,
- au moins un liquide ionique dont le pourcentage massique dans l'électrolyte est supérieur ou égal à 20% et inférieur à 50%;
- un séparateur dont l'angle de contact apparent entre sa surface et l'électrolyte, est inférieur à 20°.

Un tel accumulateur peut être utilisé dans des conditions de sécurité accrues car il possède une inflammabilité réduite. Il possède une tension élevée en décharge ainsi qu'une capacité élevée.

Selon un mode de réalisation, le pourcentage massique du liquide ionique dans l'électrolyte est inférieur ou égal à 40 %.

Selon un mode de réalisation, le pourcentage massique du liquide ionique dans l'électrolyte est inférieur ou égal à 30 %.

Selon un mode de réalisation, le pourcentage massique du liquide ionique dans l'électrolyte est supérieur ou égal à 25 %.

Selon un mode de réalisation, le liquide ionique est choisi dans le groupe comprenant le 1-butyl 1-méthyl pyrrolidinium bis(trifluorométhylsulfonyl)imide (BMP-TFSI), le 1-butyl 1-méthyl pyrrolidinium tris(pentafluoroéthyl)trifluorophosphate (BMP-FAP), l'éthyl-(2-méthoxyéthyl) diméthyl ammonium bis(trifluorométhylsulfonyl)imide, le 1-méthyl 1-propyl piperidinium bis(trifluorométhylsulfonyl)imide.

Selon un mode de réalisation, le liquide ionique est le 1-butyl 1-méthyl pyrrolidinium bis(trifluorométhylsulfonyl)imide (BMP-TFSI).

Selon un mode de réalisation, le liquide ionique est le 1-butyl 1-methyl pyrrolidinium tris(pentafluoroethyl)trifluorophosphate (BMP-FAP).

Selon un mode de réalisation, le liquide ionique est l'éthyl-(2-méthoxyéthyl) diméthylammonium bis(trifluorométhylsulfonyl)imide.

Selon un mode de réalisation, le liquide ionique est le 1-methyl 1-propyl piperidinium bis(trifluorométhylsulfonyl)imide.

Selon un mode de réalisation, le solvant organique est constitué de carbonate d'éthylène et de carbonate de méthyle éthyle dans les proportions volumiques respectives de 40-60 / 40-60.

Selon un mode de réalisation, le solvant organique est constitué de carbonate de propylène, de carbonate d'éthylène et de carbonate de diméthyle dans les proportions volumiques respectives de 10-30 / 10-30 / 50-70.

Selon un mode de réalisation, le solvant organique est constitué de carbonate d'éthylène, de carbonate de diméthyle et d'acétate d'éthyle dans les proportions volumiques respectives de 10-20 / 20-30 / 50-70.

Selon un mode de réalisation, le séparateur comprend un support qui est un matériau non tissé recouvert de particules d'alumine Al₂O₃.

### BREVE DESCRIPTION DES FIGURES

La Figure 1 représente les courbes de décharge à température ambiante, à un régime de C/2, d'accumulateurs de format 4/5A selon l'invention (A1, A2) et hors invention (X1, X2).
La Figure 2 représente les courbes de décharge à température ambiante, à un régime de C, d'accumulateurs de format 4/5A selon l'invention (A1, A2) et hors invention (X1, X2).
La Figure 3 représente la variation de la capacité déchargée au cours d'un cyclage, à température ambiante, à un régime de décharge de C/2, d'accumulateurs de format 4/5A selon l'invention (A1, A2) et hors invention (X1, X2).
La Figure 4 représente les courbes de décharge à température ambiante, à un régime de C, d'accumulateurs de format 4/5A selon l'invention (A1) et hors invention (X3, X4).
La Figure 5 représente la variation de la capacité déchargée au cours d'un cyclage à température ambiante, à un régime de C/2, d'un accumulateur de format 4/5A selon l'invention (A1) et hors invention (X3, X4).
La Figure 6 représente les courbes de décharge à température ambiante, à un régime de C, d'accumulateurs de format 4/5A selon l'invention (A1, A3, A4).
La Figure 7 représente la variation de la capacité déchargée au cours d'un cyclage à température ambiante, à un régime de C/2, d'accumulateurs de format 4/5A selon l'invention (A1, A3, A4).
La Figure 8 représente les courbes de décharge à température ambiante, à un régime de C, d'accumulateurs de format 4/5A selon l'invention (A1, A5, A6).
La Figure 9 représente la variation de la capacité déchargée au cours d'un cyclage à température ambiante, à un régime de C/2, d'accumulateurs de format 4/5A selon l'invention (A1, A5, A6).
La Figure 10 représente les courbes de décharge à température ambiante, au régime de C/2, d'accumulateurs de format 4/5A selon l'invention (A1, A7, A8).
La Figure 11 représente les courbes de décharge à température ambiante, au régime de C, d'accumulateurs de format 4/5A selon l'invention (A1, A7, A8).
Les Figures 12a et 12b illustrent respectivement une mauvaise et une bonne mouillabilité du séparateur.
La Figure 13 représente les formules générales de chacun des cations susceptibles d'être utilisés dans le liquide ionique.

### DESCRIPTION DETAILLEE DES MODES DE REALISATION DE L'INVENTION

La présente invention propose un accumulateur lithium-ion ayant une capacité et une tension élevées en décharge, une capacité stable en cyclage, et qui conserve une inflammabilité réduite.

L'accumulateur selon l'invention comprend un électrolyte comprenant :
a) un solvant organique choisi dans le groupe comprenant les carbonates, les esters linéaires d'un acide saturé, ou un mélange de ceux-ci,
b) un additif apte à former un film de passivation sur la surface de l'électrode négative,
c) au moins un sel de lithium,
d) au moins un liquide ionique dont le pourcentage massique dans l'électrolyte est supérieur ou égal à 20% et inférieur à 50%;

L'électrolyte comprend un solvant organique qui est :
- soit un ou plusieurs carbonates,
- soit un ou plusieurs esters linéaires d'un acide saturé,
- soit un mélange d'un ou plusieurs carbonates avec un ou plusieurs esters linéaires d'un acide saturé.

De préférence, on utilise un mélange de carbonates ou un mélange de carbonates et d'un ester linéaire d'un acide saturé.

Le terme « solvant organique » est utilisé dans ce qui suit pour désigner soit un ou plusieurs carbonates, soit un ou plusieurs esters linéaires d'un acide saturé, soit un mélange d'un ou plusieurs carbonates avec un ou plusieurs esters linéaires d'un acide saturé.

Les carbonates utilisés peuvent être choisis dans le groupe des carbonates cycliques saturés comprenant par exemple le carbonate d'éthylène (EC), le carbonate de propylène (PC) ou le carbonate de butylène (BC). Ils peuvent aussi être choisis dans le groupe des carbonates linéaires saturés comprenant par exemple le carbonate de diméthyle (DMC), le carbonate de diéthyle (DEC), le carbonate de méthyle éthyle (EMC), le carbonate de méthyle propyle (PMC).

L'ester linéaire d'un acide saturé est par exemple choisi parmi un acétate, un butyrate et un propionate. On choisira par exemple un acétate d'éthyle (EA), un acétate de méthyle, un acétate de propyle, un butyrate d'éthyle, un butyrate de méthyle, un butyrate de propyle, un propionate d'éthyle, un propionate de méthyle, un propionate de propyle.

Selon un mode préféré de réalisation, on utilise un mélange PC/EC/DMC dans les proportions volumiques respectives de 10-30/10-30/50-70.

Selon un autre mode préféré de réalisation, on utilise un mélange EC/DMC/EA dans les proportions volumiques respectives de 10-20/20-30/50-70.

Selon encore un autre mode de réalisation préféré, on utilise un mélange EC/EMC dans les proportions volumiques respectives de 40-60/40-60.

Le liquide ionique est constitué de la combinaison d'un anion et d'un cation.

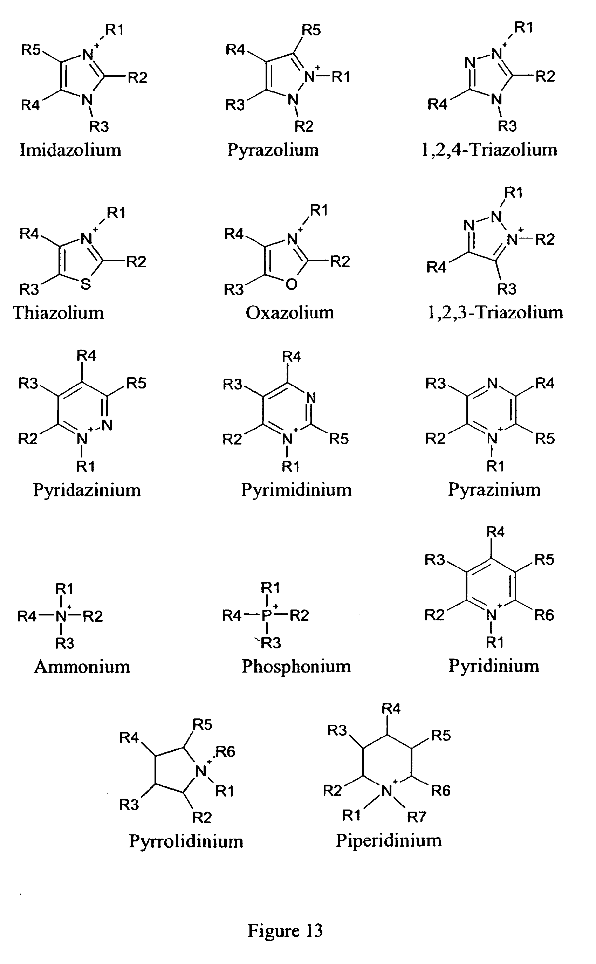

On peut citer comme cation possible du liquide ionique les cations imidazolium, pyrazolium, 1,2,4-triazolium, 1,2,3,-triazolium, thiazolium, oxazolium, pyridazinium, pyrimidinium, pyrazinium, ammonium, phosphonium, pyridinium, piperidinium et pyrrolidinium. La formule générale de chacun de ces composés est représentée Figure 13. R₁-R₇ représentent indépendamment les uns des autres H, F ou un groupe alkyle contenant de 1 à 15 atomes de carbones. Le cation est choisi de préférence parmi le 1-butyl 1-méthyl pyrrolidinium (BMP), l'éthyl-(2-méthoxyéthyl) diméthylammonium et le 1-methyl 1-propyl piperidinium.

On peut citer comme anion possible du liquide ionique le tétrafluoroborate BF₄⁻, l'hexafluorophosphate PF₆⁻, l'hexafluoroarséniate AsF₆⁻, le bis(fluorosulfonyl)imide (FSO₂)₂N⁻ (FSI), le bis(trifluoromethylsulfonyl)imide (TFSI) (CF₃SO₂)₂N⁻, le bis(pentafluoroethylsulfonyl)imide (CF₃CF₂SO₂)₂N⁻, le tris(pentafluoroethyl)trifluorophosphate (C₂F₅)₃PF₃⁻ (FAP), le trifluoromethanesulfonate (triflate) CF₃SO₃⁻. L'anion est choisi de préférence parmi le tris(pentafluoroethyl)trifluorophosphate[(C₂F₅)₃PF₃]⁻ (FAP), le bis(trifluorométhylsulfonyl)imide [(CF₃SO₂)₂N] (TFSI) et le bis(fluorosulfonyl)imide (FSO₂)₂N⁻ (FSI).

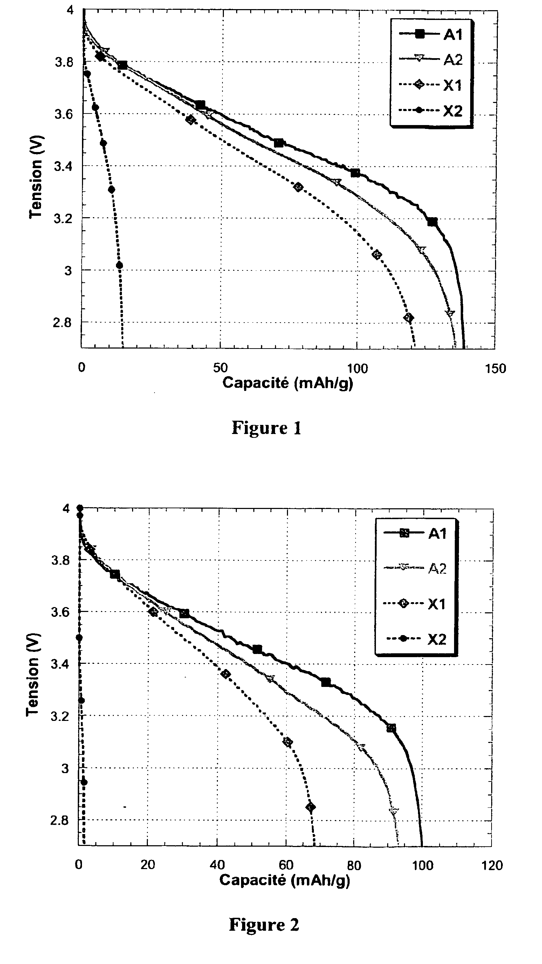

L'anion et le cation doivent être choisis de sorte que le liquide ionique soit à l'état liquide dans la plage de température de fonctionnement de l'accumulateur. Le liquide ionique présente l'avantage d'être stable thermiquement, d'être ininflammable, non volatile et d'être peu toxique. De façon surprenante, il a été démontré que le pourcentage massique de liquide ionique dans l'électrolyte doit être inférieur à 50% pour que l'accumulateur conserve une capacité et une tension élevées en décharge ainsi qu'une bonne stabilité en cyclage. Lorsque le pourcentage massique de liquide ionique dans l'électrolyte est supérieur ou égal à 50%, la capacité de l'accumulateur se dégrade comme le montrent les Figures 1, 2 et 3.

Selon un autre mode de réalisation, le pourcentage massique du liquide ionique dans l'électrolyte est inférieur ou égal à 40%.

Selon un autre mode de réalisation, le pourcentage massique du liquide ionique dans l'électrolyte est inférieur ou égal à 30%.

Pour que l'électrolyte de l'accumulateur conserve sa propriété d'ininflammabilité, il est nécessaire que le pourcentage massique du liquide ionique dans l'électrolyte soit supérieur ou égal à 20%.

Selon un mode de réalisation, le pourcentage massique du liquide ionique dans l'électrolyte est supérieur ou égal à 25%.

Les liquides ioniques préférés sont constitués :
- du cation 1-butyl 1-methyl pyrrolidinium (BMP) et de l'anion bis(trifluoromethylsulfonyl)imide [(CF₃SO₂)₂N]⁻ (TFSI).
- du cation 1-butyl 1-methyl pyrrolidinium (BMP) et de l'anion tris(pentafluoroethyl)trifluorophosphate[(C₂F₅)₃PF₃]⁻ (FAP).
- du cation ethyl-(2-methoxyethyl) dimethylammonium et de l'anion bis(trifluoromethylsulfonyl)imide [(CF₃SO₂)₂N]⁻ (TFSI).
- du cation 1-methyl 1-propyl piperidinium et de l'anion bis(trifluoromethylsulfonyl)imide [(CF₃SO₂)₂N]⁻ (TFSI).

L'électrolyte peut contenir un mélange de plusieurs liquides ioniques.

On ajoute au solvant organique et au(x)liquide(s) ionique(s) un additif de passivation apte à former un film de passivation sur la surface de l'électrode négative. Ce film de passivation se forme à la surface de l'électrode négative lorsque celle-ci est placée au contact du solvant de l'électrolyte. Ce film protège l'électrode négative contre une co-insertion du solvant avec les ions Li⁺ au cours du fonctionnement de l'accumulateur. On peut citer comme additif de passivation, le carbonate de vinylène (VC), qui est un carbonate cyclique insaturé. De préférence, VC est présent en une quantité allant de 0,1 à environ 5 % du volume des autres constituants de l'électrolyte.

Au moins un sel de lithium est dissous dans le mélange constitué par le solvant organique, le(s) liquide(s) ionique(s) et l'additif de passivation. Le sel de lithium est par exemple choisi parmi l'hexafluorophosphate de lithium LiPF₆, le tris(pentafluoroethyl)trifluorophosphate de lithium LiFAP, le bisoxalatoborate de lithium LiBOB, le perchlorate de lithium LiClO₄, l'hexafluoroarsénate de lithium LiAsF₆, le tétrafluoroborate de lithium LiBF₄, le trifluorométhanesulfonate de lithium LiCF₃SO₃, le trifluorométhane sulfonimide de lithium LiN(CF₃SO₂)₂ (LiTFSI) ou le trifluorométhanesulfoneméthide de lithium LiC(CF₃SO₂)₃ (LiTFSM). L'anion du sel de lithium peut être identique à l'anion du liquide ionique. De préférence le sel ou les sels de lithium est (sont) ajouté(s) à raison de 0,1 à 2 mol/L.

L'accumulateur selon l'invention comprend au moins une électrode positive, au moins une électrode négative, un séparateur et l'électrolyte tel que décrit ci-avant.

La matière active de l'électrode positive peut être un oxyde lithié d'un métal de transition tel que LiCoO₂, LiNiO₂, LiMnO₂, LiMn₂O₄, LiFePO₄. Elle peut également résulter de la substitution d'une partie du métal principal de ces matériaux par un ou plusieurs métaux de transition. En particulier, le nickel d'un oxyde mixte de nickel et de lithium par un ou plusieurs métaux de transition tels que Co, Mn, Al, Mg, Ti.

La matière active de l'électrode positive peut également éventuellement être enrobée.

Selon un mode de réalisation, la matière active positive a pour formule

LiNi_{1-x-y}CoₓAl_{y}O₂ avec x compris entre 0,10 et 0,20 et y compris entre 0,01 et 0,10.

La matière active de l'électrode négative est un matériau susceptible d'insérer du lithium dans sa structure. Avantageusement, le matériau susceptible d'insérer du lithium dans sa structure est un matériau carboné. Ce matériau carboné est choisi de préférence parmi le graphite, le coke, le noir de carbone et le carbone vitreux. Le matériau carboné peut également éventuellement être enrobé.

Le séparateur est caractérisé par une mouillabilité élevée dans l'électrolyte. D'une façon générale, lorsqu'un liquide est mis en contact avec la surface d'un solide, il se forme un angle de contact (ou angle de raccordement) du liquide sur la surface du solide. Plus l'angle de contact est faible, meilleure est la mouillabilité du séparateur. Lorsque le mouillage est parfait, l'angle de contact devient nul. Le séparateur selon l'invention est caractérisé par un angle de contact apparent avec l'électrolyte inférieur à 20°.

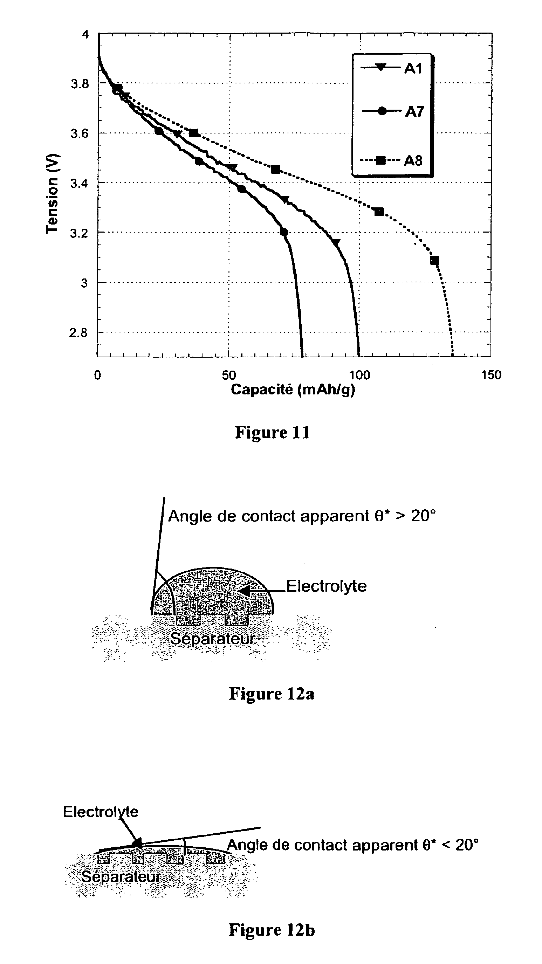

L'angle de contact est défini comme l'angle entre une goutte et une surface plane. L'angle de contact apparent est défini comme l'angle entre une goutte et une surface rugueuse. Les schémas des Figures 12a et 12b définissent l'angle de contact apparent entre la surface du séparateur et l'électrolyte. Le séparateur de la Figure 12a possède une mauvaise mouillabilité. Le séparateur de la Figure 12b possède une bonne mouillabilité.

De préférence, un tel séparateur est un séparateur en céramique. Un tel séparateur comprend un substrat flexible comprenant des fibres de polyoléfine de préférence non tissées et un revêtement de céramique. Le substrat peut être constitué de fibres de polyéthylène (PE) ou de polypropylène (PP) ou de polyéthylène téréphtalate (PET). Le séparateur est recouvert de particules d'un oxyde métallique pouvant être de l'alumine Al₂O₃.

L'invention s'applique à tout format d'électrodes : format prismatique (électrodes planes), format cylindrique (électrodes spiralées) ou concentrique (bobine).

D'autres caractéristiques et avantages de la présente invention apparaîtront au cours des exemples suivants de réalisation, donnés à titre illustratif et non limitatif.

### EXEMPLES

### Exemple 1 : Influence du pourcentage de liquide ionique dans l'électrolyte

Quatre accumulateurs cylindriques A1, A2, X1 et X2 de format 4/5A ont été préparés. Ils comprennent chacun :
- une électrode positive contenant une matière active positive de formule chimique LiNi_{0,80}Co_{0,15}Al_{0,05}O₂,
- une électrode négative de graphite,
- un séparateur PET non tissé revêtu de particules Al₂O₃ (séparateur céramique).

L'électrolyte des accumulateurs A1 et A2 selon l'invention contient :
A1 : 70% PC/EC/DMC (20/20/60) + 30% BMP TFSI,
A2 : 60% PC/EC/DMC (20/20/60) + 40% BMP TFSI,

L'électrolyte des accumulateurs X1 et X2 hors invention contient :
X1 : 50% PC/EC/DMC (20/20/60) + 50% BMP TFSI.
X2 : 20% PC/EC/DMC (20/20/60) + 80% BMP TFSI.
   - Les électrolytes des accumulateurs A1, A2, X1, X2 contiennent tous LiPF₆ 1 Mol/L et 1% de VC. Ces compositions d'électrolyte sont toutes non-inflammables (test du papier Manille : Des bandelettes de 1 cm de large et de 10 cm de long sont découpées dans du papier Manille puis plongées dans l'électrolyte. Ces bandelettes imprégnées sont alors suspendues sur un support métallique et une flamme est approchée par en dessous)

### Test électrique :

Les accumulateurs A1, A2, X1 et X2 ont subi :
   - un cycle de « formation » à 60°C afin que les accumulateurs atteignent leur capacité nominale,
   - une caractérisation à température ambiante aux régimes de charge de C/5 et de décharge de C/2 et C,
   - 200 cycles de cyclage au régime C/2 à température ambiante.

Les figures 1 et 2 montrent qu'aux régimes de décharge de C/2 et C, la capacité déchargée par les accumulateurs A1 et A2 est très satisfaisante. Au contraire, les capacités déchargées des accumulateurs X1 et X2 sont insuffisantes.

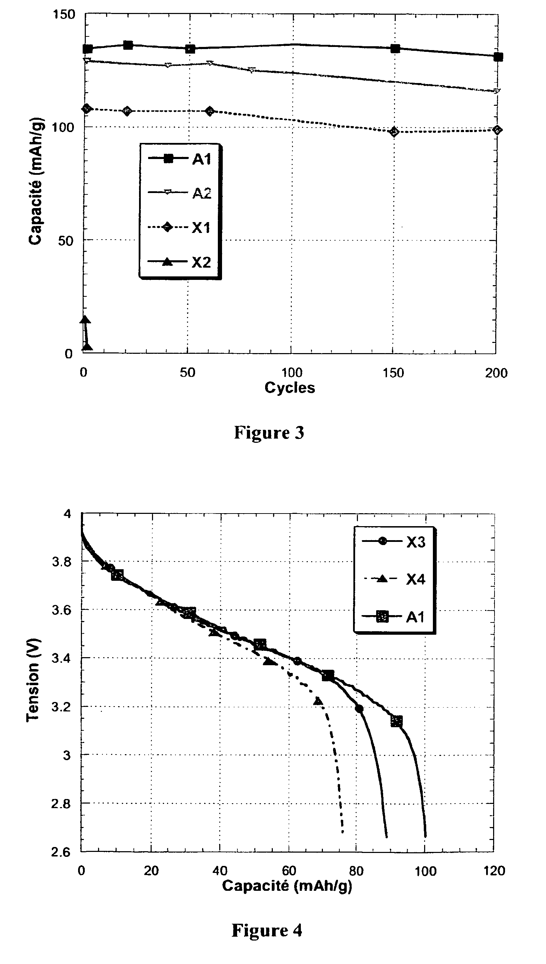

La figure 3 montre d'autre part que les accumulateurs A1 et A2 possèdent une capacité stable en cyclage. Le meilleur résultat est obtenu avec l'accumulateur A1 dont la capacité déchargée ne varie quasiment pas après 200 cycles et reste comprise entre 130 et 135 mAh/g.

### Exemple 2 : Influence de la nature du séparateur

Trois accumulateurs A1, X3 et X4 de format 4/5A ont été préparés. Ils comprennent chacun :
- une électrode positive LiNi_{0,80}Co_{0,15}Al_{0,05}O₂,
- une électrode négative de graphite, et
- une composition d'électrolyte identique comprenant :
- 70% d'un mélange de carbonates constitué de PC/EC/DMC (20/20/60)
- 30% de liquide ionique : cation 1-butyl 1-methyl pyrrolidinium (BMP) et anion bis(trifluoromethylsulfonyl)imide [(CF₃SO₂)₂N]⁻ (TFSI)
- LiPF₆ 1Mol/L
- 1%VC

Cette composition d'électrolyte est non-inflammable (test du papier Manille).

L'accumulateur A1 selon l'invention contient un séparateur non tissé recouvert de particules d'alumine Al₂O₃ (séparateur en céramique). Les tests de mouillabilité montrent que la surface d'un tel séparateur et l'électrolyte forme un angle de contact inférieur à 20°.

L'accumulateur X3 hors invention contient un séparateur tricouche polypropylène/polyéthylène/polypropylène dont l'angle de contact avec l'électrolyte est supérieur à 40°.

L'accumulateur X4 hors invention contient un séparateur de polyéthylène dont l'angle de contact avec l'électrolyte est supérieur à 40°.

Les séparateurs des accumulateurs X3 et X4 ne possèdent pas une mouillabilité élevée.

Les accumulateurs A1, X3 et X4 ont été soumis aux mêmes tests électriques que dans l'exemple 1.
La Figure 4 montre que la capacité la plus élevée en décharge au régime C est obtenue pour l'accumulateur A1 possédant un séparateur en céramique.

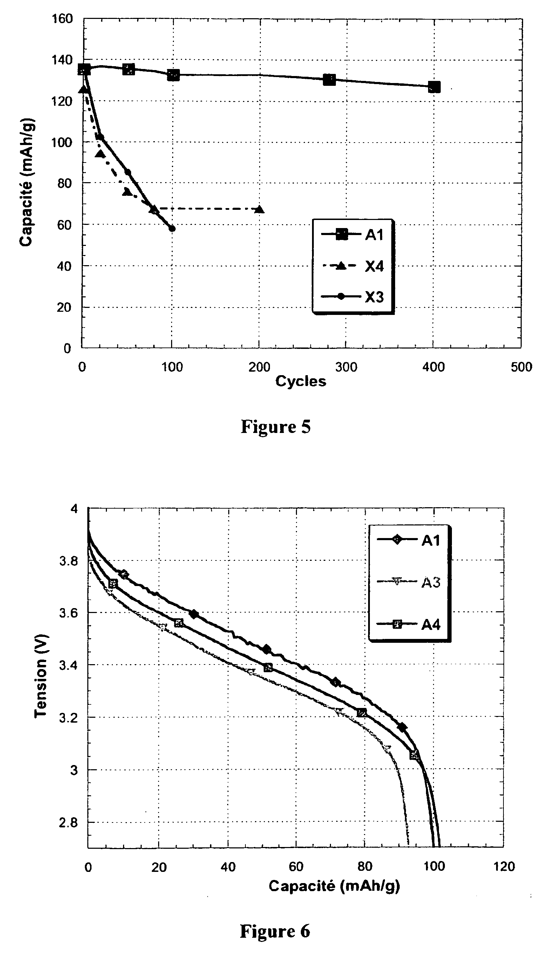

La Figure 5 montre que l'accumulateur présentant la capacité la plus stable en cyclage est aussi l'accumulateur A1. La capacité des accumulateurs X3 et X4 n'est pas stable au cours du cyclage.

### Exemple 3 : influence de la nature de l'anion du liquide ionique

Trois accumulateurs A1, A3, A4 de format 4/5A ont été préparés. Ils contiennent chacun :
- une électrode positive LiNi_{0,80}Co_{0,15}Al_{0,05}O₂,
- une électrode négative de graphite,
- un séparateur non tissé recouvert de particules Al₂O₃ (séparateur céramique).
- un électrolyte contenant 70% d'un mélange de carbonates constitué de PC/EC/DMC (20/20/60) et 30% de liquide ionique dont le cation est le 1-butyl 1-methyl pyrrolidinium (BMP).

L'anion du liquide ionique de l'accumulateur A1 selon l'invention est le bis(trifluoromethylsulfonyl)imide [(CF₃SO₂)₂N]⁻ (TFSI).

L'anion du liquide ionique de l'accumulateur A3 selon l'invention est le bis(fluorosulfonyl)imide [(FSO₂)₂N]⁻ (FSI).

L'anion du liquide ionique de l'accumulateur A4 selon l'invention est le tris(pentafluoroethyl)trifluorophosphate [(C₂F₅)₃PF₃]⁻ (FAP).

L'électrolyte des accumulateurs A1, A3 et A4 contient LiPF₆ 1Mol/L et 1%VC.

Les accumulateurs A1, A3 et A4 ont été soumis aux mêmes tests électriques que dans l'exemple 1. Les accumulateurs A1, A3 et A4 possèdent une capacité élevée et une bonne stabilité en cyclage.

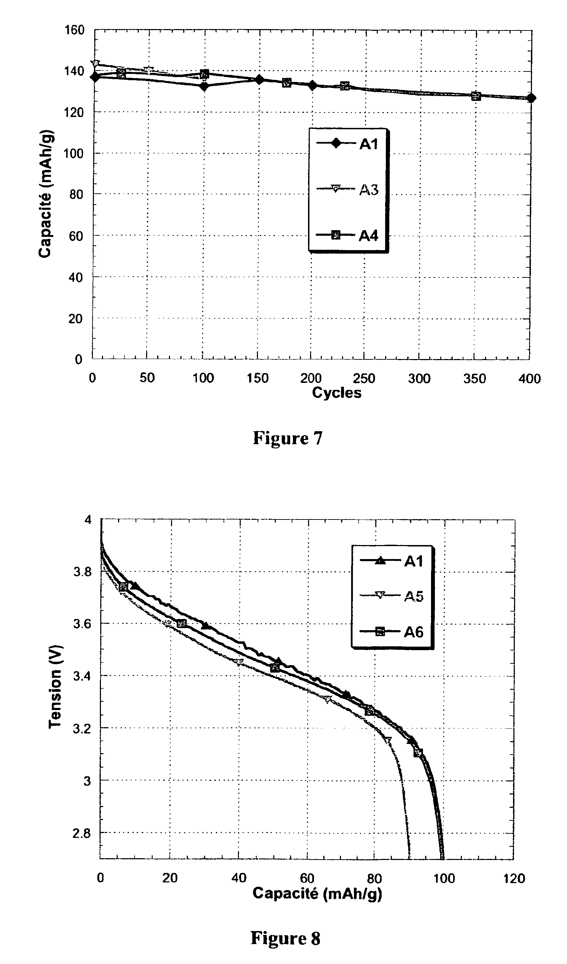

Les figures 6 et 7 montrent que les meilleurs résultats en décharge à C et en cyclage à C/2 sont obtenus avec le cation butyl methyl pyrrolidinium et les anions TFSI et FAP (A1 et A4).

### Exemple 4 : influence de la nature du cation du liquide ionique

Trois accumulateurs A1, A5 et A6 de format 4/5A ont été préparés. Ils contiennent chacun :
- une électrode positive LiNi_{0,80}Co_{0,15}Al_{0,05}O₂,
- une électrode négative de graphite,
- un séparateur non tissé recouvert de particules Al₂O₃ (séparateur céramique).
- un électrolyte contenant 70% d'un mélange de carbonates constitué de PC/EC/DMC (20/20/60) et 30% de liquide ionique dont l'anion est le bis(trifluoromethylsulfonyl)imide [(CF₃SO₂)₂N]⁻ (TFSI).

Le cation du liquide ionique de l'accumulateur A1 selon l'invention est le 1-butyl 1-methyl pyrrolidinium (BMP).

Le cation du liquide ionique de l'accumulateur A5 selon l'invention est l'ethyl-(2-methoxyethyl) dimethylammonium.

Le cation du liquide ionique de l'accumulateur A6 selon l'invention est le 1-methyl 1-propyl piperidinium.

L'électrolyte des accumulateurs A1, A5 et A6 contient LiPF₆ 1Mol/L et 1%VC.

Les accumulateurs A1, A5 et A6 ont été soumis aux mêmes tests électriques que dans l'exemple 1.
La Figure 8 montre que le meilleur résultat en décharge à C est obtenu avec les cations 1-butyl 1-methyl pyrrolidinium et 1-methyl 1-propyl piperidinium et l'anion TFSI (A1 et A6).

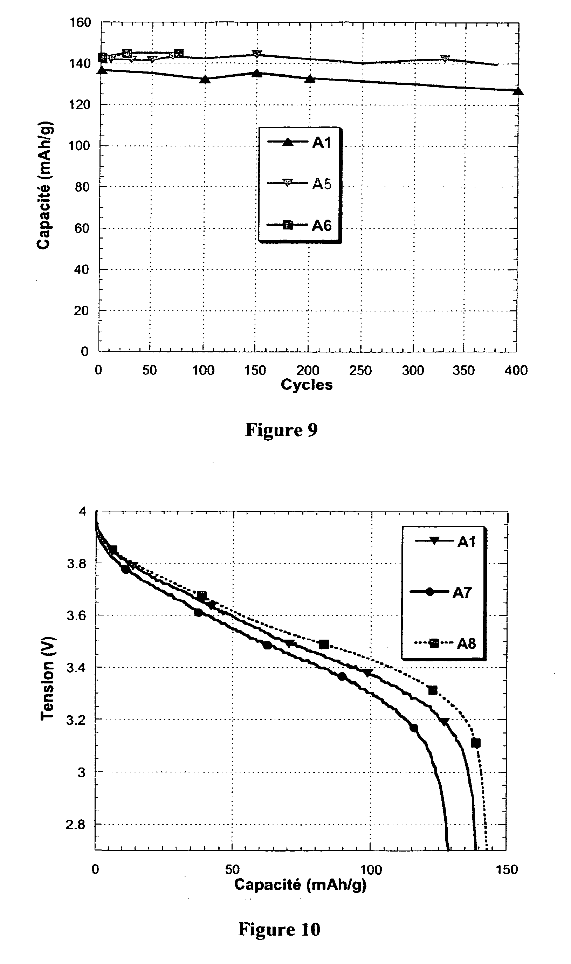

La Figure 9 montre qu'une bonne stabilité en cyclage est obtenue lorsque l'anion TFSI est combiné avec l'un des cations 1-butyl 1-methyl pyrrolidinium (A1), ethyl-(2-methoxyethyl) dimethylammonium (A5) ou 1-methyl 1-propyl piperidinium (A6).

### Exemple 5 : influence de la composition du mélange de carbonates

Trois accumulateurs A1, A7 et A8 de format 4/5A ont été préparés. Ils contiennent chacun :
- une électrode positive LiNi_{0,80}Co_{0,15}Al_{0,05}O₂,
- une électrode négative de graphite,
- un séparateur non tissé recouvert de particules Al₂O₃ (séparateur céramique).
- un électrolyte contenant 70% d'un mélange de carbonates et 30% de liquide ionique dont l'anion est le bis(trifluoromethylsulfonyl)imide [(CF₃SO₂)₂N]⁻(TFSI) et le cation est le 1-butyl 1-methyl pyrrolidinium.

Le solvant de l'électrolyte de l'accumulateur A1 est un mélange de carbonates PC/EC/DMC (20/20/60).

Le solvant de l'électrolyte de l'accumulateur A7 est un mélange de carbonates EC/EMC (50/50).

Le solvant de l'électrolyte de l'accumulateur A8 est un mélange de carbonates et d'un acétate EC/DMC/EA (15/25/60).

Les accumulateurs A1, A7 et A8 ont été soumis aux mêmes tests électriques que dans l'exemple 1.

Les figures 10 et 11 montrent que les meilleurs résultats en caractérisation à C/2 et à C sont obtenus avec la composition d'électrolyte contenant le mélange de carbonates et d'acétate EC/DMC/EA (15/25/60), suivie par la composition d'électrolyte contenant le mélange de carbonates PC/EC/DMC (20/20/60).

## Revendications

1. Accumulateur contenant :
- une électrode positive,
- une électrode négative,
- un électrolyte comprenant :
- un solvant organique choisi dans le groupe comprenant les carbonates, les esters linéaires d'un acide saturé, ou un mélange de ceux-ci,
- un additif apte à former un film de passivation sur la surface de l'électrode négative,
- au moins un sel de lithium,
- au moins un liquide ionique dont le pourcentage massique dans l'électrolyte est supérieur ou égal à 20% et inférieur à 50%;
- un séparateur dont l'angle de contact apparent entre sa surface et l'électrolyte est inférieur à 20°.

2. Accumulateur selon la revendication 1, dans lequel le pourcentage massique du liquide ionique dans l'électrolyte est inférieur ou égal à 40 %.

3. Accumulateur selon la revendication 1 ou 2, dans lequel le pourcentage massique du liquide ionique dans l'électrolyte est inférieur ou égal à 30 %.

4. Accumulateur selon l'une des revendications 1 à 3, dans lequel le pourcentage massique du liquide ionique dans l'électrolyte est supérieur ou égal à 25 %.

5. Accumulateur selon l'une des revendications 1 à 4, dans lequel le liquide ionique est choisi dans le groupe comprenant le 1-butyl 1-méthyl pyrrolidinium bis(trifluorométhylsulfonyl)imide (BMP-TFSI), le 1-butyl 1-méthyl pyrrolidinium tris(pentafluoroéthyl)trifluorophosphate (BMP-FAP), l'éthyl-(2-méthoxyéthyl) diméthyl ammonium bis(trifluorométhylsulfonyl)imide, le 1-méthyl 1-propyl piperidinium bis(trifluorométhylsulfonyl)imide.

6. Accumulateur selon l'une des revendications 1 à 5, dans lequel le liquide ionique est le 1-butyl 1-méthyl pyrrolidinium bis(trifluorométhylsulfonyl)imide (BMP-TFSI).

7. Accumulateur selon l'une des revendications 1 à 5, dans lequel le liquide ionique est le 1-butyl 1-methyl pyrrolidinium tris(pentafluoroethyl)trifluorophosphate (BMP-FAP).

8. Accumulateur selon l'une des revendications 1 à 5, dans lequel le liquide ionique est l'éthyl-(2-méthoxyéthyl) diméthylammonium bis(trifluorométhylsulfonyl)imide.

9. Accumulateur selon l'une des revendications 1 à 5, dans lequel le liquide ionique est le 1-methyl 1-propyl piperidinium bis(trifluorométhylsulfonyl)imide.

10. Accumulateur selon l'une des revendications précédentes, dans lequel le solvant organique est constitué de carbonate d'éthylène et de carbonate de méthyle éthyle dans les proportions volumiques respectives de 40-60 / 40-60.

11. Accumulateur selon l'une des revendications 1 à 9, dans lequel le solvant organique est constitué de carbonate de propylène, de carbonate d'éthylène et de carbonate de diméthyle dans les proportions volumiques respectives de 10-30 / 10-30 / 50-70.

12. Accumulateur selon l'une des revendications 1 à 9, dans lequel le solvant organique est constitué de carbonate d'éthylène, de carbonate de diméthyle et d'acétate d'éthyle dans les proportions volumiques respectives de 10-20 / 20-30 / 50-70.

13. Accumulateur selon l'une des revendications précédentes, dans lequel le séparateur comprend un support qui est un matériau non tissé recouvert de particules d'alumine Al₂O₃.

## Claims

1. A battery containing:
- a positive electrode,
- a negative electrode,
- an electrolyte comprising:
- an organic solvent chosen from the group comprising carbonates, linear esters of a saturated acid, or a mixture thereof,
- an additive capable of forming a passivation film on the surface of the negative electrode,
- at least one lithium salt,
- at least one ionic liquid, the weight percentage of which in the electrolyte is greater than or equal to 20% and less than 50%;
- a separator, the apparent contact angle of which between its surface and the electrolyte is less than 20°.

2. The battery according to claim 1, in which the weight percentage of the ionic liquid in the electrolyte is less than or equal to 40%.

3. The battery according to claim 1 or 2, in which the weight percentage of the ionic liquid in the electrolyte is less than or equal to 30%.

4. The battery according to one of claims 1 to 3, in which the weight percentage of the ionic liquid in the electrolyte is greater than or equal to 25%.

5. The battery according to one of claims 1 to 4, in which the ionic liquid is chosen from the group comprising 1-butyl 1-methyl pyrrolidinium bis(trifluoromethylsulphonyl)imide (BMP-TFSI), 1-butyl 1-methyl pyrrolidinium tris(pentafluoroethyl)trifluorophosphate (BMP-FAP), ethyl-(2-methoxyethyl) dimethyl ammonium bis(trifluoromethylsulphonyl)imide, 1-methyl 1-propyl piperidinium bis(trifluoromethylsulphonyl)imide.

6. The battery according to one of claims 1 to 5, in which the ionic liquid is 1-butyl 1-methyl pyrrolidinium bis(trifluoromethylsulphonyl)imide (BMP-TFSI).

7. The battery according to one of claims 1 to 5, in which the ionic liquid is 1-butyl 1-methyl pyrrolidinium tris(pentafluoroethyl)trifluorophosphate (BMP-FAP).

8. The battery according to one of claims 1 to 5, in which the ionic liquid is ethyl-(2-methoxyethyl) dimethylammonium bis(trifluoromethylsulphonyl)imide.

9. The battery according to one of claims 1 to 5, in which the ionic liquid is 1-methyl 1-propyl piperidinium bis(trifluoromethylsulphonyl)imide.

10. The battery according to one of the previous claims, in which the organic solvent is constituted by ethylene carbonate and methyl ethyl carbonate in the respective proportions by volume of 40-60 / 40-60.

11. The battery according to one of claims 1 to 9, in which the organic solvent is constituted by propylene carbonate, ethylene carbonate and dimethyl carbonate in the respective proportions by volume of 10-30 /10-30 / 50-70.

12. The battery according to one of claims 1 to 9, in which the organic solvent is constituted by ethylene carbonate, dimethyl carbonate and ethyl acetate in the respective proportions by volume of 10-20 / 20-30 / 50-70.

13. The battery according to one of the previous claims, in which the separator comprises a support which is a non-woven material coated with particles of alumina Al₂O₃.

## Patentansprüche

1. Batterie, die Folgendes enthält:
- eine positive Elektrode,
- eine negative Elektrode,
- einen Elektrolyt, der Folgendes umfasst:
- ein organisches Lösungsmittel, das aus der Gruppe bestehend aus Carbonaten, linearen Estern einer gesättigten Säure oder einem Gemisch davon ausgewählt ist,
- einen Zusatzstoff, der auf der Oberfläche der negativen Elektrode eine Passivierungsschicht bilden kann,
- mindestens ein Lithiumsalz,
- mindestens eine ionische Flüssigkeit, deren Massenanteil in dem Elektrolyt mehr als oder gleich 20 % und weniger als 50 % ausmacht;
- ein Trennelement, dessen scheinbarer Kontaktwinkel zwischen seiner Oberfläche und dem Elektrolyt weniger als 20° beträgt.

2. Batterie nach Anspruch 1, wobei der Massenanteil der ionischen Flüssigkeit in dem Elektrolyt weniger als oder gleich 40 % ausmacht.

3. Batterie nach Anspruch 1 oder 2, wobei der Massenanteil der ionischen Flüssigkeit in dem Elektrolyt weniger als oder gleich 30 % ausmacht.

4. Batterie nach Anspruch 1 bis 3, wobei der Massenanteil der ionischen Flüssigkeit in dem Elektrolyt mehr als oder gleich 25 % ausmacht.

5. Batterie nach einem der Ansprüche 1 bis 4, wobei die ionische Flüssigkeit aus der Gruppe umfassend 1-Butyl-1-methylpyrrolidiniumbis(trifluormethylsulfonyl)imid (BMP-TFSI), 1-Butyl-1-methylpyrrolidiniumtris-(pentafluorethyl)trifluorphosphat (BMP-FAP), Ethyl-(2-methoxyethyl)dimethylammoniumbis(trifluormethylsulfonyl) imid und 1-Methyl-1-propylpiperidinium-bis(trifluormethylsulfonylimid) ausgewählt ist.

6. Batterie nach einem der Ansprüche 1 bis 5, wobei es sich bei der ionischen Flüssigkeit um 1-Butyl-1-methylpyrrolidiniumbis(trifluormethylsulfonyl)imid (BMP-TFSI) handelt.

7. Batterie nach einem der Ansprüche 1 bis 5, wobei es sich bei der ionischen Flüssigkeit um 1-Butyl-1-methylpyrrolidiniumtris(pentafluorethyl)trifluor-phosphat (BMP-FAP) handelt.

8. Batterie nach einem der Ansprüche 1 bis 5, wobei es sich bei der ionischen Flüssigkeit um Ethyl-(2-methoxyethyl)dimethylammoniumbis(trifluormethylsulfonyl) imid handelt.

9. Batterie nach einem der Ansprüche 1 bis 5, wobei es sich bei der ionischen Flüssigkeit um 1-Methyl-1-propylpiperidiniumbis(trifluormethylsulfonylimid) handelt.

10. Batterie nach einem der vorhergehenden Ansprüche, wobei das organische Lösungsmittel sich aus Ethylencarbonat und Ethylmethylcarbonat in den jeweiligen Volumenanteilen von 40-60:40-60 zusammensetzt.

11. Batterie nach einem der Ansprüche 1 bis 9, wobei das organische Lösungsmittel sich aus Propylencarbonat, Ethylencarbonat und Dimethylcarbonat in den jeweiligen Volumenanteilen von 10-30:10-30:50-70 zusammensetzt.

12. Batterie nach einem der Ansprüche 1 bis 9, wobei das organische Lösungsmittel sich aus Ethylencarbonat, Dimethylcarbonat und Ethylacetat in den jeweiligen Volumenanteilen von 10-20:20-30:50-70 zusammensetzt.

13. Batterie nach einem der vorhergehenden Ansprüche, wobei das Trennelement einen Träger umfasst, bei dem es sich um einen Vliesstoff handelt, der mit Teilchen aus Aluminiumoxid Al₂O₃ bedeckt ist.
